# EUROPÄISCHE PATENTANMELDUNG

(11) **EP 0 991 156 A2**
(43) Veröffentlichungstag der Anmeldung: **05.04.2000**
(21) Anmeldenummer: 99117657.9
(22) Anmeldetag: 07.09.1999
(51) Int. Cl.: H02G 3/00

(54) **Gebäude mit mehreren Nutzungseinheiten**

(30) Priorität: 02.10.1998 DE 19845549
(71) Anmelder: Stotz Städtebau GmbH & Co.KG, 88214 Ravensburg (DE)
(72) Erfinder: Stotz, Peter H., 88276 Berg (DE)
(74) Vertreter: Barske, Heiko, Dr. rer. nat.

(57) **Zusammenfassung**

Ein Gebäude mit mehreren Nutzungseinheiten (18a- 18d), die über eigene Energieversorgungsleitungen (26a-26d) an eine zentrale Energieverteilereinheit (22) angeschlossen sind, und eine zumindest einigen der Nutzungseinheiten gemeinschaftlich zuordenbaren Gemeinschaftsnutzungseinheit, die mehrere Energieverbrauchereinheiten (8a-8d) enthält, die über eine Leitung in Reihe mit einer Gemeinschaftsenergieversorgungsleitung (28) verbunden sind, welche an die Energieverteilereinheit angeschlossen sind, ist dadurch gekennzeichnet, daß die die einzelnen Energieverbrauchereinheiten (8a-8d) miteinander verbindende Leitung (30, 32, 34, 36, 38, 40) zwischen den Energieverbrauchereinheiten zu der Energieverteilereinheit (22) geführt ist, so daß die Energieverbrauchereinheiten wahlweise an die den einzelnen Nutzungseinheiten (18a-18d) zugeordneten Energieversorgungsleitungen (26a-26d) oder die Gemeinschaftsenergieversorgungsleitung (28) anschließbar sind.

## Beschreibung

Die Erfindung betrifft ein Gebäude mit mehreren Nutzungseinheiten, die über eigene Versorgungsleitungen an eine zentrale Vereilereinheit angeschlossen sind.

Insbesondere bei Wohngebäuden mit mehreren Wohneinheiten stellt sich häufig das Problem, daß die Wohneinheiten flexibel genutzt werden sollen. Beispielsweise gehört eine Wohneinheit Eltern, die Kinder bekommen und dafür zeitweilig eine weitere Wohneinheit zukaufen oder zumieten wollen, um eine aus zwei Wohneinheiten bestehende Wohnung zu haben, die von der Familie genutzt wird. Die einzelnen Wohneinheiten sind über einen Gang zugänglich, der im allgemeinen im Gemeinschaftseigentum aller Eigentümer der Wohneinheiten ist und der ebenfalls versorgt werden muß, beispielsweise mit Heizung, Strom zur Beleuchtung, Wasser usw.. Wenn zwei Wohneinheiten gemeinschaftlich genutzt werden sollen, wird dazu vorteilhafterweise ein Teil des bisher im Gemeinschaftseigentum stehenden Ganges abgetrennt und den gemeinschaftlich genutzten Wohneinheiten zugeordnet. Der Verbrauch der in diesem Bereich angeordneten Energieverbraucher, der ursprünglich von allen Bewohnern gemeinsam getragen wurde, muß dann jedoch den Nutzern der zusammengefaßten Wohneinheiten zugerechnet werden. Dies macht bei herkömmlichen Gebäuden erhebliche Probleme, bei denen die in Gemeinschaftseigentum stehenden Energieverbraucher über eigene Zähler abgerechnet werden.

Der Erfindung liegt die Aufgabe zugrunde, ein Gebäude mit mehreren Nutzungseinheiten zu schaffen, bei dem die Nutzungseinheiten in flexibler Weise genutzt werden können, insbesondere individuell zusammengefaßt werden können.

Diese Aufgabe wird mit den Merkmalen des Hauptanspruchs gelöst.

Bei dem erfindungsgemäßen Gebäude ist es in einfacher Weise möglich, bei Zusammenfassung von Nutzungseinheiten die entsprechenden Verbrauchereinheiten, der Gemeinschaftnutzungseinheiten in der Verteilereinheit derart anzuschließen, daß ehemals gemeinschaftlich genutzten Verbrauchereinheiten von der Versorgungsleitung aus versorgt werden, die den zusammengefaßten Nutzungseinheiten zugeordnet ist. Es sind keinerlei Installationsarbeiten in den Nutzungseinheiten des Gebäudes erforderlich. Die Änderung der Anschlüsse erfolgt in der Verteilereinheit, die unter Verschluß steht und beispielsweise Hoheit des jeweiligen Energieversorgungsunternehmens ist.

Die Unteransprüche sind auf vorteilhafte Weiterbildungen des erfindungsgemäßen Gebäudes gerichtet.

Die Erfindung ist für Wohngebäude, gewerblich genutzte Gebäude usw. anwendbar. Über die Versorgungsleitungen kann beispielsweise Strom, Gas, Elektrizität, Druckluft, Wasser, Warmwasser usw. zugeführt werden oder ein Klingelsystem, Türsprechsystem usw. betrieben werden.

Die Erfindung wird im folgenden anhand schematischer Zeichnungen beispielsweise und mit weiteren Einzelheiten erläutert.

Es stellen dar:
- Fig. 1: schematisch eine Stirnansicht eines Wohngebäudes mit einem Stockwerk und einem Energieverteilsystem,
- Fig. 2: einen Grundriß des Stockwerks gemäß Fig. 1,
- Fig. 3: einen Schaltplan der Energieverteilungseinheit in einem ersten Zustand,
- Fig. 4: einen Schaltplan der Energieversorgungseinheit in einem zweiten Zustand und
- Fig. 5: ein Schaltbild einer Flurbeleuchtung.

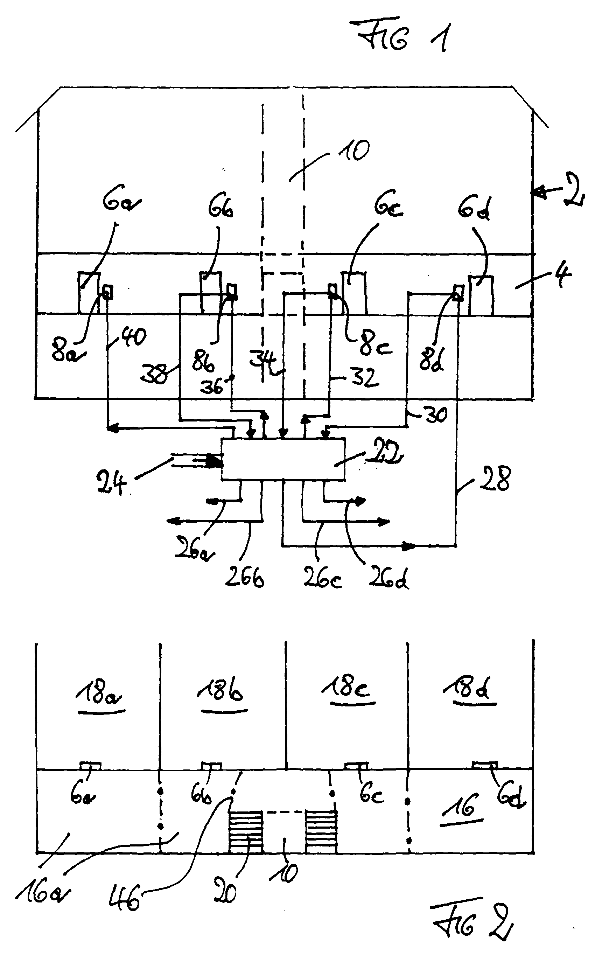

Gemäß Fig. 1 weist ein Wohngebäude 2 mehrere Stockwerke auf, von denen ein Stockwerk 4 dargestellt ist.

Von dem Stockwerk 4 führen Eingangstüren 6a, 6b, 6c und 6d zu einzelnen Wohneinheiten. Neben den Eingangstüren sind Lichtschalter 8a bis 8d, mit denen in Fig. 1 nicht dargestellte Beleuchtungskörper schaltbar sind, die den gemeinsamen Flur beleuchten, von dem aus die Wohneinheiten betretbar sind. Die Flure der einzelnen Stockwerke sind mittels eines Fahrstuhls 10 erreichbar.

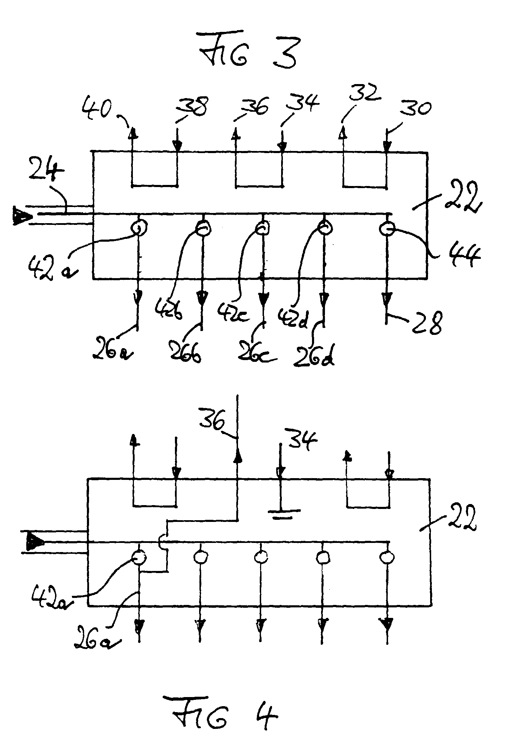

Fig. 2 zeigt den Grundriß des Stockwerks 4. Sichtbar ist der in den gemeinsamen Flur 16 mündende Fahrstuhl 10. Von dem gemeinsamen Flur 16 gehen die Eingangstüren 6a bis 6d aus und führen in Wohneinheiten 18a, 18b, 18c und 18d. Die einzelnen Flure des Gebäudes sind nicht nur über den Fahrstuhl 10 erreichbar, sondern auch über ein Treppenhaus 20.

Die Energieversorgung des Stockwerks 4 erfolgt von einer Verteilereinheit 22 aus, die im Keller des Gebäudes oder im Bereich des Flurs 4 angeordnet ist und den Bewohnern nicht unmittelbar zugänglich ist. In die Verteilereinheit 22 mündet ein Hauptversorgungskabel 24, das innerhalb der Verteilereinheit 22 mit Leitungen 26a bis 26d verbunden ist, die die Wohneinheiten 18a bis 18d mit Strom versorgen. Weiter wird vom Hauptversorgungskabel 24 aus eine Gemeinschaftsleitung 28 gespeist, die im dargestellten Beispiel mit dem Schalter 8d verbunden ist. Von dem Schalter 8d führt eine weitere Leitung 30 zum Verteiler 22. Zum Schalter 8c führen zwei Leitungen 32 und 34 vom Verteiler 22. Zum Schalter 6b führen zwei Leitungen 36 und 38 und zum Schalter 6a führt schließlich eine Leitung 40.

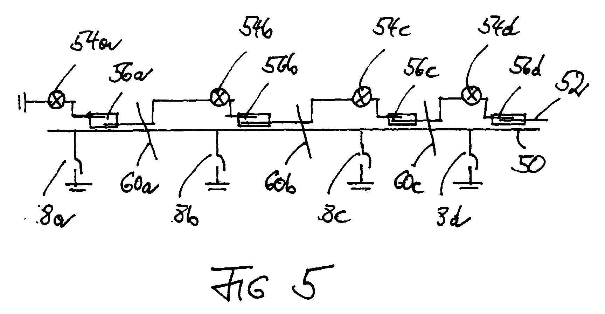

Fig. 3 zeigt einen Schaltungszustand der Verteilereinheit 22, bei dem der Flur 4 insgesamt in Gemeinschaftsnutzung ist. Das Hauptversorgungskabel 24 ist über Zähler 42a bis 42d jeweils mit einer der Leitungen 26a bis 26d verbunden, über die die Wohneinheiten 18a bis 18d mit Strom versorgt werden. Somit kann der Stromverbrauch jeder der Wohneinheiten individuell an den Zählern abgelesen werden.

Weiter ist das Hauptversorgungskabel 24 über einen Zähler 44 mit der Gemeinschaftsleitung 28 verbunden, die zum Schalter 8d führt. Die Leitungen 30 und 32, 34 und 36 sowie 38 und 40 sind innerhalb der Verteilereinheit 22 jeweils miteinander verbunden, so daß alle Schalter bzw. die zugehörigen Beleuchtungseinheiten des Flurs 4 über die Gemeinschaftsleitung 28 mit Strom versorgt werden und der Gemeinschaftsenergieverbrauch am Zähler 44 ablesbar ist.

Wenn nun beispielsweise die Wohneinheiten 18a und 18b zusammengefaßt werden sollen und dazu der Flur 16 durch eine mit einer Eingangstüre versehenen Trennwand 46 (Fig. 2) unterteilt wird, so entsteht ein eigenständiger, zu den Wohneinheiten 18a und 18b gehöriger Flurbereich 16a, der den Wohneinheiten 18a und 18b individuell zugeordnet ist. Entsprechend ist auch der über die Lichtschalter 16a und 16b bewirkte Stromverbrauch bzw. sind die zugeordneten Beleuchtungseinheiten den zusammengefaßten Wohneinheiten 18a und 18b zuzuordnen. Dies geschieht gemäß Fig. 4 dadurch, daß die Leitung 34 innerhalb der Verteilereinheit 21 an Erde gelegt wird und die Leitung 36 stromab des Zählers 42a mit der Leitung 26a verbunden wird. Auf diese Weise wird der durch die Schalter 8a und 8b bewirkte Stromverbrauch der zugeordneten Flurbeleuchtungen dem Zähler 42a zugeordnet und sind die Schalter 8a und 8b vollständig von den Schaltern 8c und 8d getrennt.

Es versteht sich, daß bei Zusammenfassung der Wohneinheiten 18a und 18b die Leitung 26b stromab des Zählers 42a mit der Leitung 26a verbunden werden kann, so daß der Zähler 42b keinen Strom mehr zählt und der gesamte Stromverbrauch der Wohneinheiten 18a und 18b über den Zähler 42a ablesbar ist.

Bei geänderter Zusammenfassung von Wohneinheiten erfolgt eine sinngemäße Änderung der Anschlüsse der Leitungen 30 bis 40 innerhalb der Verteilereinheit 22.

Wie in Fig. 2 strichpunktiert dargestellt, kann der Flur 16 derart konzipiert sein, daß Trennwände mit zugehörigen Türen an unterschiedlichen Stellen auf einfache Weise einsetzbar sind, beispielsweise indem vorgefertigte Anschlußelemente in dem Flurboden, der Flurdecke und Flurwänden vorgesehen sind, mit denen vorgefertigte Bauelemente verbunden werden. So kann beispielsweise die Wohneinheit 18a derart erweitert werden, daß ihr der gemäß Fig. 2 linke Flurbereich und entsprechend der Schalter 6a zugeordnet wird. Die Grenzen der Individualisierung sind dadurch gegeben, daß jeder individualisierte Wohnbereich über die Treppe bzw. den Fahrstuhl erreichbar ist. Im Extremfall können alle Wohneinheiten 18a bis 18d eines Stockwerks zusammengefaßt werden, so daß der Flur vollständig den dann zusammengefaßten Wohneinheiten zugeordnet ist und über den Zähler 44 kein Strom mehr erfaßt wird.

Die in Fig. 1, 3 und 4 dargestellten Leitungen können Wasserleitungen, Gasleitungen usw. sein, die jeweils über die Verteilereinheit 22 zweckentsprechend miteinander verbunden sind. Die Verteilereinheit 22 ist insgesamt oder nur bezüglich nur der Anschlüsse versiegelt, so daß eine Manipulation nicht möglich ist. Bei dem Gebäude muß es sich nicht notwendigerweise um ein Wohngebäude handeln; es kann sich auch um ein gewerblich genutztes Gebäude handeln, in den verschiedene individuell genutzte Einheiten untergebracht sind, die über einen Gemeinschaftsflur zugänglich sind. Das Gebäude kann einstöckig sein. Die zusammengefaßten Nutzungseinheiten müssen nicht notwendigerweise auf gleicher Höhe sein. Sie können auch in unterschiedlichen Stockwerken liegen.

Fig. 5 zeigt ein Schaltungsbeispiel für eine Flurbeleuchtung. Von der Verteilereinheit 22 (in Fig. 5 nicht dargestellt) gehen als Gemeinschaftsleitungen sowohl eine Signalleitung als auch eine Leistungsleitung 52 aus. An der Signalleitung 50 liegen parallel zueinander die Schalter 8a bis 8d. Den Schaltern zugeordnete Lampen 54a bis 54d liegen in Reihe miteinander an der Leistungsleitung, wobei in dieser Leistungsleitung jeweils zwischen zwei Lampen ein Stromstoßschalter 56a bis 56d angeordnet ist. Wird einer der Schalter 18a bis 18d betätigt, so schließen alle Stromstoßschalter 26a bis 26d infolge des in der Signalleitung 50 auftretenden Impulses, so daß alle Lampen 54a bis 54d leuchten. Erfindungsgemäß ist diese bekannte Schaltung an den Stellen 60a, 60b und 60c aufgetrennt bzw. zu der Verteilereinheit 22 geführt, und dort entweder derart geschaltet, daß sich die Schaltung gemäß Fig. 5 ergibt, in der alle Lampen gemeinsam betätigt werden und über einen einzigen Zähler laufen oder, beispielsweise wie in Fig. 4 dargestellt, angeschlossen sind, so daß nur die Lampen 54c und 54d über den Gemeinschaftszähler 44 laufen und die Lampen 54a und 54b mit den zugehörigen Schaltern 18a und 18b den Wohneinheiten 18a und 18b zugeordnet sind.

Es versteht sich, daß die beschriebene Schaltung nur beispielhaft ist und in vielfältiger Weise abgeändert werden kann. Auch ist es möglich, nach Individualisierung von Schaltern bzw. Stromstoßschaltern etwaige vorhandene Zeitrelais auszubauen, so daß dauerhafte An- und Ausschaltungen realisiert werden können, wie sie im Individualbereich eines Wohngebäudes praktischer sind.

Die Erfindung kann auch für weitere Leitungssysteme eines Gebäudes mit mehreren Nutzungsleitern mit Vorteil eingesetzt werden, beispielsweise Klingelsysteme, Türsprechsysteme usw. Wenn deren Leitungen über eine zentrale Verteilereinheit geführt sind, ist bei einer Nutzungsänderung lediglich durch Umklemmen der Leitungen eine flexible Anpassung möglich.

Mit der Erfindung ist ein flexibler Nutzungskonzept für ein Gebäude mit individuell und gemeinschaftlich genutzten Einheiten geschaffen, die in einfacher Weise entsprechend den jeweiligen Bedürfnissen verändert werden können.

## Patentansprüche

1. Gebäude mit mehreren Nutzungseinheiten (18a- 18d), die über eigene Versorgungsleitungen (26a-26d) an eine zentrale Verteilereinheit (22) angeschlossen sind, und
einer zumindest einigen der Nutzungseinheiten gemeinschaftlich zuordenbaren Gemeinschaftsnutzungseinheit, die mehrere Verbrauchereinheiten (8a-8d) enthält, die über eine Leitung in Reihe mit einer Gemeinschaftsversorgungsleitung (28) verbunden sind, welche an die Verteilereinheit angeschlossen sind,
dadurch gekennzeichnet, daß
die die einzelnen Verbrauchereinheiten (8a-8d) miteinander verbindende Leitung (30, 32, 34, 36, 38, 40) zwischen den Verbrauchereinheiten zu der Verteilereinheit (22) geführt ist, so daß die Verbrauchereinheiten wahlweise an die den einzelnen Nutzungseinheiten (18a-18d) zugeordneten Versorgungsleitungen (26a-26d) oder die (Gemeinschaftsversorgungsleitung (28) anschließbar sind.

2. Gebäude nach Anspruch 1, dadurch gekennzeichnet, daß in den Versorgungsleitungen (26a-26d) und der Gemeinschaftsversorgungsleitung (28) Zähleinrichrungen (42a-42d, 44) angeordnet sind.

3. Gebäude nach Anspruch 1 oder 2, dadurch gekennzeichnet, daß die Leitungen zum Versorgen der Nutzungseinheiten (18a-18d) mit elektrischer Energie dienen und daß die Verbrauchereinheiten elektrische Verbrauchereinheiten sind.

4. Gebäude nach einem der Ansprüche 1 bis 3, dadurch gekennzeichnet, daß die Nutzungseinheiten Wohneinheiten (18a-18d) sind und die Gemeinschaftsnutzungseinheit (4) ein Flur ist, von dem aus die Wohnungen betretbar sind.

5. Gebäude nach Anspruch 3 oder 4, dadurch gekennzeichnet, daß die Gemeinschaftsnutzungseinheiten Beleuchtungseinheiten (54a-54d) mit diesen jeweils zugeordneten Schaltern (8a-8d) sind, wobei im nicht den einzelnen Wohneinheiten (18a-18d) zugeordneten Zustand der Beleuchtungseinheiren beim Betätigen eines Schalters alle Beleuchtungseinheiten betätigt werden.

6. Gebäude nach Anspruch 5, dadurch gekennzeichnet, daß
die Schalter (8a-8d) parallel an einer Signalleitung (50) liegende Tastschalter sind, bei deren Betätigung die Signalleitung mit einem Schaltimpuls beaufschlagt wird,
daß jeder der mittels einer Leistungsleitung (52) in Reihe geschaltenen Beleuchtungseinheiten (54a-54d) ein in die Leistungsleitung geschalteter Leistungsschalter (56a-56d) zugeordnet ist, der durch einen Schaltimpuls geschaltet wird, und
daß die Signalleitung und die Leistungsleitung zwischen je zwei einer Nutzungseinheit (18a-18d) zugeordneten Beleuchtungseinheiten und Tastschaltern zur Energieverteilereinheit (22) geführt sind, so daß die Beleuchtungseinheiten mit zugehörigen Tastschaltern wahlweise an die Stromversorgungsleitungen (26a-26d) der einzelnen Nutzungseinheiten (18a-18d) oder die Gemeinschaftsleitung (28) anschließbar sind.

7. Gebäude nach Anspruch 4, dadurch gekennzeichent, daß Einrichtungen (60) vorgesehen sind, mittels derer der Flur (4) derart unterteilbar ist, daß Teilbereiche einzelnen der Nutzungseinheiten (18a-18d) individuell zugeordnet sind.
